# EUROPÄISCHE PATENTSCHRIFT

(11) **EP 1 638 822 B1**
(45) Veröffentlichungstag und Bekanntmachung des Hinweises auf die Patenterteilung: **25.02.2009**
(21) Anmeldenummer: 04727502.9
(22) Anmeldetag: 15.04.2004
(51) Int. Cl.: B60S 1/04

(54) **SCHEIBENWISCHVORRICHTUNG, INSBESONDERE FÜR EIN KRAFTFAHRZEUG**
WIPER DEVICE, ESPECIALLY FOR A MOTOR VEHICLE
SYSTEME D'ESSUIE-GLACE, DESTINE NOTAMMENT A UN VEHICULE AUTOMOBILE

(30) Priorität: 18.06.2003 DE 10327858
(43) Veröffentlichungstag der Anmeldung: 29.03.2006
(73) Patentinhaber: ROBERT BOSCH GMBH, 70442 Stuttgart (DE)
(72) Erfinder: METZ, Ulrich, 77855 Achern (DE)
(86) Internationale Anmeldenummer: PCT/DE2004/000792
(87) Internationale Veröffentlichungsnummer: WO 2004/113135

(56) Entgegenhaltungen:
- EP-A- 0 916 559
- EP-A- 0 950 586
- WO-A-03/051690
- DE-A- 19 833 488
- US-A- 3 606 406

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen bekannt, die einen Träger aufweisen, der an einem ersten Teil, beispielsweise der Karosserie des Kraftfahrzeugs, befestigt wird. Üblicher Weise weist der Träger Öffnungen auf, durch die Schrauben oder Niete gezogen werden können, sodass die Scheibenwischvorrichtung mit Hilfe von mehreren Schrauben und verschiedenen Dämpfungselementen an der Karosserie festgeschraubt werden kann. Dies ist relativ aufwändig und kostenintensiv, da an der Karosserie des Kraftfahrzeugs mit einem Gewinde versehene Bohrungen angebracht werden müssen oder Löcher vorgesehen sein müssen, auf die eine Schraubenmutter aufgeschweißt ist.

Darüber hinaus ist die Scheibenwischvorrichtung dadurch sehr fest mit der Karosserie des Fahrzeugs verbunden, wodurch sich ein Fußgänger bei einem Aufprall auf die Motorhaube des Kraftfahrzeugs an den aus der Karosserie ragenden Wischerwellen, die die Wischerarme und die Wischblätter tragen, leicht verletzen kann.

Aus der EP-A-0950586 ist eine Befestigungsvorrichtung für eine Wischanlage mit den Merkmalen des Oberbegriffs des Anspruchs 1 bekannt.

### Vorteile der Erfindung

Die erfindungsgemäße Scheibenwischvorrichtung mit den Merkmalen des Hauptanspruchs hat den Vorteil, dass durch eine Drehverbindung mit einem Verschlusselement die Scheibenwischvorrichtung in einfachster Weise an der Karosserie des Kraftfahrzeugs befestigt werden kann. Eine Drehverbindung benötigt kein Gewinde und kann durch eine Drehung kleiner als 360 Grad geschlossen werden. Dadurch werden die Anzahl der Arbeitsschritte vor und während der Montage verringert und die Kosten bei der Herstellung und der Montage reduziert. Weiterhin wird durch eine Sollbruchstelle im Verschlusselement eine einfache und kostengünstige Realisierung eines Fußgänger Aufprallschutzes bewirkt.

Durch die in den Unteransprüchen aufgeführte Maßnahmen ergeben sich vorteilhafte Weiterbildungen und Verbesserung der im Hauptanspruch angegebenen Merkmale.

Besonders vorteilhaft ist, wenn die Drehverbindung eine Raste aufweist, die zur Orientierung des Verschlusselementes dient und dieses in einer bevorzugten Stellung arretiert. Auf diese Weise wird die Verbindungsfestigkeit erhöht, sodass sich die Verbindung auch bei starken, länger andauernden Erschütterungen, wie sie sich im Fahrbetrieb ständig ergeben, nicht von selbst löst. Durch die Sollbruchstelle ist jedoch trotzdem ein Lösen der Verbindung beim Aufprall eines Fußgängers auf die Wischerwellen der Scheibenwischvorrichtung gewährleistet.

Besonders einfach wird die Drehverbindung dadurch realisiert, dass der Träger eine Öffnung aufweist und das Verschlusselement im verschlossenen Zustand die Öffnung durchgreift.

Zur Verbesserung der Dämpfung und zur Vermeidung von Schallbrücken ist es vorteilhaft, wenn zwischen Verschlusselement und Öffnung eine elastische Dämpfungsmuffe angeordnet ist.

Weist das Verschlusselement einen ersten Abschnitt auf, der in Querschnitt länger ist als breit, so wird eine stabile Befestigung der Scheibenwischvorrichtung an der Fahrzeugkarosserie bewirkt und es kann in einfacher Weise eine Sollbruchstelle vorgesehen werden.

In besonders einfacher Weise lässt sich dies durch einen ellipsenförmigen Querschnitt realisieren.

Durch eine Quernut zur Aufnahme des ersten Teils entstehen am ersten Abschnitt des Verschlusselementes Laschen, die die Verbindungsfestigkeit weiter erhöhen. Hierbei ist es von besonderem Vorteil, wenn die Breite der Quernut größer ist als die Dicke des ersten Teils.

Besonders einfach lässt sich das erste Teil als Stanz oder als Stanzbiegeteil ausbilden, welches ein Loch aufweist das die Form des ersten Abschnitts des Verschlusselementes hat.

Hierbei ist besonders vorteilhaft, wenn das Verschlusselement das erste Teil durchgreift und das erste Teil eine Schräge aufweist, derart dass das Verschlusselement beim Schließvorgang in das erste Teil hineingezogen wird. Auf dieser Weise wird die Verbindungsfestigkeit erhöht und ein gewindeartiger Effekt erzielt, ohne das Gewinde in die Karosserie des Kraftfahrzeugs geschnitten werden müssen. Ist eine Dämpfungsmuffe zwischen Verschlusselement und Öffnung des Trägers angeordnet, so wird dieses durch die Schräge des ersten Teils vorgespannt, wodurch die Dämpfung weiter verbessert wird.

Zur einfachen Montage ist es vorteilhaft, wenn das Verschlusselement einen Eingriff aufweist, der mit einem Werkzeug zusammenzuwirken vermag.

### Zeichnungen

Ein Ausführungsbeispiel der Erfindung ist in den Zeichnungen dargestellt und in den nachfolgenden Beschreibung näher erläutert. Es zeigen:
Figur 1 eine erfindungsgemäße Scheibenwischvorrichtung in schematischer Darstellung,
Figur 2 ein Wischerlager, eine erfindungsgemäße Scheibenwischvorrichtung mit dem Befestigungsbereich in einer Explosionsdarstellung,

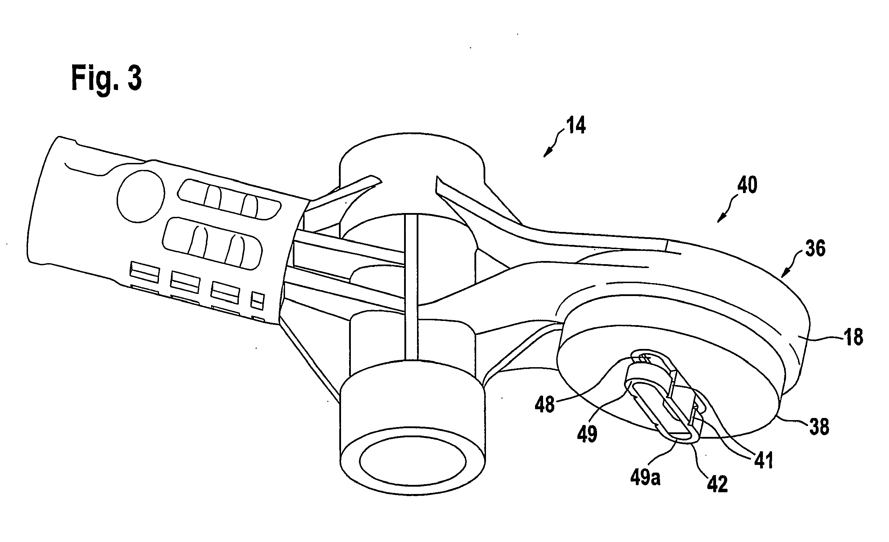

Figur 3 der Verbindungsbereich im Anlieferzustand beim Kfz-Hersteller,
Figur 4 der Befestigungsbereich einer Scheibenwischvorrichtung in montierter Position und
Figur 5 eine Variation des Wischerlagers der Scheibenwischvorrichtung aus Figur 2.

### Beschreibung der Ausführungsbeispiele

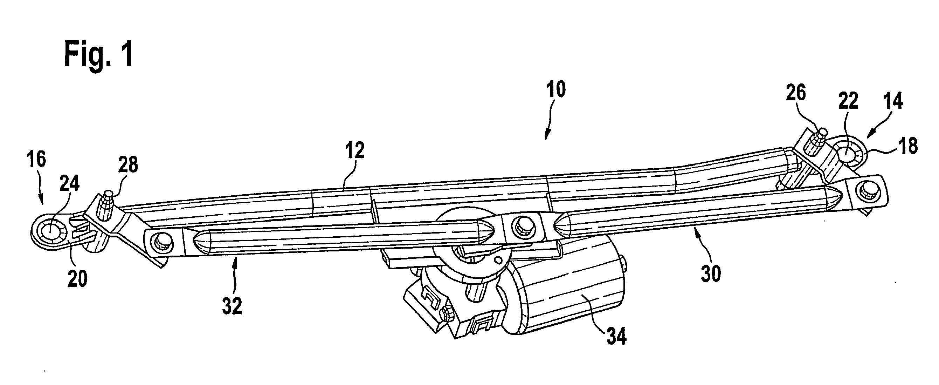

Figur 1 zeigt eine erfindungsgemäße Scheibenwischvorrichtung 10 in schematischer Darstellung. Diese umfasst im wesentlichen einen Träger 12 der aus einem Rohr besteht, an dessen Enden jeweils ein Wischerlager 14, 16 angeordnet ist. Jedes Wischerlager 14, 16 weist Ohren 18, 20 auf, welche jeweils eine Öffnung 22, 24 besitzen. In den Wischerlagern 14, 16 sind darüber hinaus Wischerwellen 26, 28 gelagert, die mit hier nicht gezeigten Wischerarmen verbunden sind. Angetrieben werden die Wischerwellen 26, 28 über ein Kurbelgetriebe 30, 32, welches von einer Motor 34 in Bewegung versetzt wird.

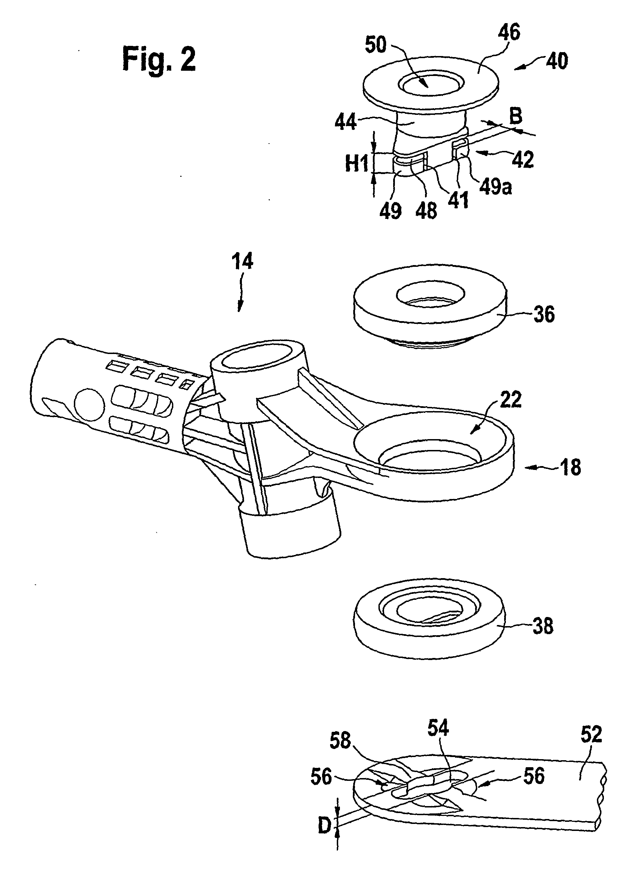

Figur 2 zeigt ein Wischerlager einer erfindungsgemäßen Scheibenwischvorrichtung in einer Explosionsdarstellung. Das Wischerlager 14 als Teil des Trägers 12 weist ein Ohr 18 mit einer Öffnung 22 auf. In die Öffnung 22 wird die Dämpfungsmuffe 36, 38 eingesteckt, die hier zweiteilig ausgeführt ist. Natürlich ist auch denkbar, die Muffe 36, 38 einteilig auszuführen. Die Dämpfungsmuffen 36, 38 sind als Gummischeiben ausgebildet, die auch formschlüssig in der Öffnung 22 des Trägers 12 sitzen können. In die Öffnung 22 mit den Dämpfungsmuffen 36, 38 ist ein Verschlusselement 40 eingefügt, welche im wesentlichen drei Abschnitte aufweist. Ein erster ellipsenförmiger Abschnitt 42 an den sich ein zweiter kreiszylindrischer Abschnitt 44 anschließt. An diesen schließt sich wiederum ein dritter kreisscheibenförmiger Abschnitt 46 an. Der erste scheibenförmige, im Querschnitt ellipsenförmige Abschnitt 42 weist eine Höhe von Hl auf und besitzt eine Quernut 48 der Breite B.

Im dritten Abschnitt 46 ist darüber hinaus ein Eingriff 50 angeordnet, der beispielsweise als Vielkant oder als Schlitz ausgebildet ist, in dem ein Werkzeug eingefügt werden kann, um das Verschlusselement 40 bei der Montage leicht drehen zu können.

Das Verschlusselement 40 selbst wird bei der Montage in ein erstes Teil 52 eingesteckt und relativ zu diesem um einen Winkel kleiner 360 Grad verdreht. Das erste Teil 52 ist dabei als Blechteil, insbesondere als Stanzbiegeteil ausgebildet, weist die Dicke D auf und ist mit der Fahrzeugkarosserie verbunden. Darüber hinaus weist es ein Loch 54 auf, welches dieselbe Kontur hat, wie der erste Abschnitt 42 des Verschlusselements 40, so daß dieses das erste Teil 54 durchdringen kann. Idealerweise ist das erste Teil 52 einstückig mit der Fahrzeugkarosserie ausgebildet.

Die Quernut 48, deren Breite B typischerweise größer ist als die Dicke D des Teils 52, lässt zwei Laschen 49, 49a entstehen, die über das Querschnittsprofil des zweiten Abschnitts hinausragen. Die Laschen 49, 49a weisen hierbei Sollbruchstellen 41 auf, die einen verminderten Widerstandsquerschnitt besitzen. Alternativ kann auch nur eine der Laschen 49, 49a eine Sollbruchstelle 41 aufweisen. Natürlich kann, anstatt der Quernut 48 auch eine einfache Stufe vorgesehen sein, sodass die Laschen 49, 49a ebenfalls über die Kontur des zweiten Abschnitts hinausragen.

Als weitere Alternative kann die Sollbruchstelle 41 auch im zweiten Abschnitt 44 angeordnet sein. Hierzu kann dieser eine zumindest teilweise umlaufende Nute aufweisen, den Widerstandsquerschnitt des zweiten Abschnitts 44 verringert.

Sinnvollerweise sind die Enden der Wischerwellen 26, 28 die mit den Wischerarmen verbunden werden, auf der dem ersten Teil 52 zugewandten Seite des Wischerlagers 14 angeordnet, so daß die Ohren 18 bei einer Belastung der Wischerwelle 26, 28 vom ersten Teil 52 weggedrückt werden.

Bei der Montage durchdringt der erste Abschnitt 42 mit den Laschen 49, 49a des Verschlusselementes 40 das erste Teil 52, durch das Loch 54. Durch Verdrehen des Verschlusselementes 40 wird der Träger 12 der Scheibenwischvorrichtung 10 mit dem ersten Teil 52 als Teil der Fahrzeugkarosserie verbunden. Im Bereich des Lochs 54 weist das Teil 52 Erhebungen oder Ausstanzungen derart auf, dass eine radiale, gewindeartige Schräge 56 entsteht, an der die Laschen 49, 49a beim Drehen des Verschlusselementes 40 entlang gleiten, sodass sich der Abstand des dritten Abschnitts 46 des Verschlusselementes 40 und dem ersten Teil 52 verringert und das Verschlusselement 40 quasi in das Teil 52 hineingezogen wird. Am hohen Ende der Schräge 56, ist noch eine Raste 58 vorgesehen, die als kleine Senke ausgebildet ist, in die zumindest eine Lasche 49 hineingleitet. Diese verhindert ein Abgleiten der Lasche 49 an der Schräge 56, wenn sich das Verschlusselement 40 im verschlossener Position befindet. So ergibt sich ein Bajonettverschluß, der eine hohe Festigkeit aufweist.

Figur zeigt den Befestigungsbereich eines Trägers in Anlieferzustand an den Kraftfahrzeughersteller. Das Verschlusselement 40 ist durch die Öffnung 22 des Ohrs 18 des Wischerlagers 14 gezogen und wird durch die Dämpfungselemente 36, 38 eingeschlossen. Aus dem Dämpfungselement 38 ragt der erste Abschnitt 42 mit den Laschen 49, 49a und der Quernut 48 heraus.

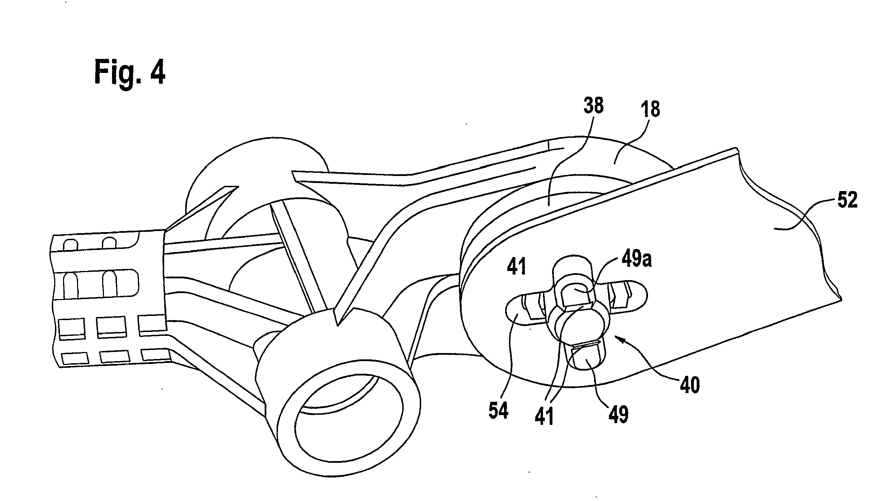

Figur 4 zeigt den Befestigungsbereich des Trägers 12 in montierter Darstellung. Das Verschlusselement 40 hat die Dämpfungselemente 36, 38, sowie die Öffnung 22 und das erste Teil 52 durch das Loch 54 durchdrungen und wurde um etwa 90° zu seiner Längsachse verdreht. Auf dieser Weise bilden die Laschen 49, 49a Halterungen am Teil 52 derart, daß der Träger der Scheibenwischvorrichtung 10 zwischen den dritten Abschnitt 46 des Verschlusselementes 40 und den Laschen 49, 49a des ersten Abschnitts des Verschlusselementes eingeklemmt ist.

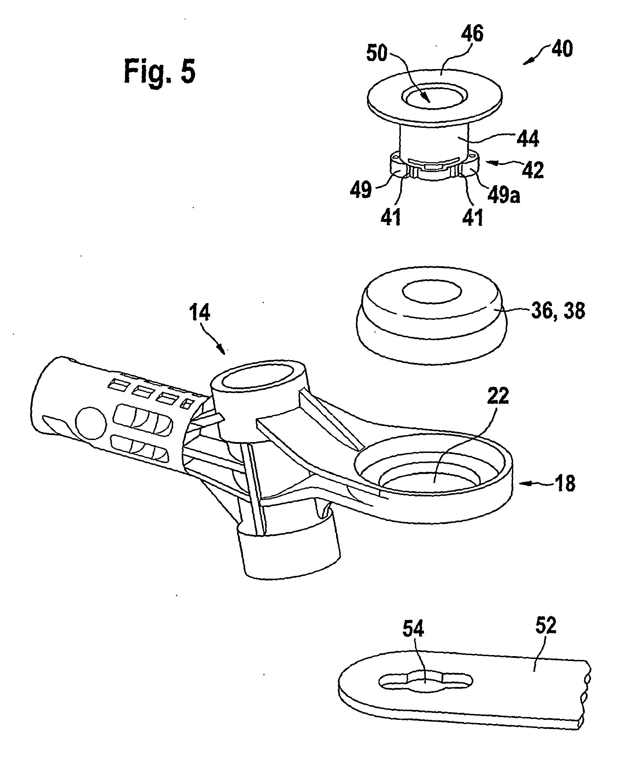

In Figur 5 ist eine Variation der erfindungsgemäßen Scheibenwischvorrichtung gezeigt. Das Verschlusselement 40 besteht wiederum aus drei Abschnitten. Der erste Abschnitt 42 entspricht einer doppelten Schlüssellochkontur und bildet dadurch zwei Laschen 49, 49a, die über die zylindrische Kontur des zweiten Abschnitts 44 hinausragen. Der zweite Abschnitt 44 schließt sich an den ersten Abschnitt 42 direkt an und bildet mit diesem an den Laschen 49, 49a eine Stufe. An diesen zweiten Abschnitt 44 schließt sich wiederum der dritte Abschnitt 42 an, der den Eingriff 50 zur Aufnahme eines Werkzeugs aufweist.

Natürlich kann auch der dritte Abschnitt 46 beispielsweise in seiner Außenkontur als Vielkant ausgebildet sein und somit selbst als Eingriff dienen. Die Dämpfungsmuffen 36, 38 sind hier einstückig ausgebildet und können als ganzes in die Öffnung 22 des Wischerlagers 14 des Trägers 12 eingefügt werden. Das Loch 54 des ersten Teils 52 hat wiederum die Kontur des doppelten Schlüsselloches, sodass das Loch den ersten Abschnitt 42 des Verschlusselementes 40 aufzunehmen vermag.

Das Verschlusselement 40 ist als Kunststoffspritzgussteil ausgebildet, jedoch kann dieses auch aus einem Metall beispielsweise Aluminium, einer Aluminiumlegierung oder einer Zinklegierung ausgebildet sein. Die Dämpfungsmuffen 36 sind aus Gummi oder aus einem anderen elastischen Material, welches über ein gutes Dämpfungsverhalten verfügt. Das Teil 52 ist als einfacher Fortsatz an der Fahrzeugkarosserie festgeschweißt oder einstückig mit dieser ausgebildet. Die Wischerlager 14, 16 des Trägers 12 können aus Kunststoff aber auch aus Metall ausgebildet sein. Prinzipiell kann auch der gesamte Träger 12 einstückig aus Kunststoff gespritzt sein.

## Patentansprüche

1. Scheibenwischvorrichtung, insbesondere für ein Kraftfahrzeug, mit einem Träger (12) zur Befestigung an einem ersten Teil (54), insbesondere der Karosserie des Kraftfahrzeugs, und einem Verschlusselement (40), das den Träger (12) mittels einer Drehverbindung am ersten Teil (54) zu befestigen vermag, **dadurch gekennzeichnet, daß** das Verschlusselement (40) eine Sollbruchstelle (41) aufweist und das Verschlusselement (40) einen ersten Abschnitt (42) aufweist, der im Querschnitt länger ist als breit und die Sollbruchstelle (41) im ersten Abschnitt (42) angeordnet ist, wobei der erste Abschnitt (42) eine Quernut (48) zur Aufnahme des ersten Teils (54) aufweist.

2. Scheibenwischvorrichtung nach Anspruch 1, **dadurch gekennzeichnet, daß** die Drehverbindung eine Raste (58) zur Arretierung des Verschlusselementes (40) aufweist, so daß eine Dreh-Rast Verbindung gebildet ist.

3. Scheibenwischvorrichtung nach Anspruch 1 oder 2, **dadurch gekennzeichnet, daß** der Träger (12) eine Öffnung (22) aufweist und daß Verschlusselement (40) in verschlossenem Zustand die Öffnung (22) durchgreift.

4. Scheibenwischvorrichtung nach Anspruch 3, **dadurch gekennzeichnet, daß** zwischen Verschlusselement (40) und Öffnung (22) mindestens eine, zumindest teilweise eleastische Dämpfungsmuffe (36, 38) angeordnet ist.

5. Scheibenwischvorrichtung nach Anspruch 1, **dadurch gekennzeichnet, daß** der erste Abschnitt (42) im Querschnitt ellipsenförmig ist.

6. Scheibenwischvorrichtung nach Anspruch 1, **dadurch gekennzeichnet, daß** die Breite (B) der Quernut (48) größer ist als die Dicke D des ersten Teils (42).

7. Scheibenwischvorrichtung nach einem der Ansprüche 1 bis 6, **dadurch gekennzeichnet, daß** das erste Teil (54) als Stanz- oder Stanz-Biege-Teil ausgebildet ist und ein Loch (54) aufweist, welches die Form des ersten Abschnitts (42) des Verschlusselementes (40) hat.

8. Scheibenwischvorrichtung nach einem der vorhergehenden Ansprüche **dadurch gekennzeichnet, daß** das Verschlusselement (40) das erste Teil (42) durchgreift und das erste Teil (54) eine Schräge (56) aufweist, derart daß das Verschlusselement (40) beim Schließvorgang in das erste Teil (54) gezogen wird.

9. Scheibenwischvorrichtung nach einem der vorhergehenden Ansprüche, **dadurch gekennzeichnet, daß** das Verschlusselement (40) einen Eingriff (50) aufweist, der mit einem Werkzeug zusammenzuwirken vermag.

## Claims

1. Wiper device, especially for a motor vehicle, with a support (12) for fastening to a first part (54), in particular to the motor vehicle body, and with a closure element (40) which is capable of fastening the support (12) to the first part (54) by means of a rotational connection, **characterized in that** the closure element (40) has a predetermined breaking point (41) and the closure element (40) has a first portion (42) which is more long than wide in cross section, and the predetermined breaking point (41) is arranged in the first portion (42), with the first portion (42) having a transverse groove (48) for receiving the first part (54).

2. Wiper device according to Claim 1, **characterized in that** the rotational connection has a latch (58) for locking the closure element (40) in place such that a rotational/latching connection is formed.

3. Wiper device according to Claim 1 or 2, **characterized in that** the support (12) has an opening (22), and **in that** the closure element (40), in the closed state, reaches through the opening (22).

4. Wiper device according to Claim 3, **characterized in that** at least one at least partially elastic damping bushing (36, 38) is arranged between the closure element (40) and opening (22).

5. Wiper device according to Claim 1, **characterized in that** the first portion (42) is elliptical in cross section.

6. Wiper device according to Claim 1, **characterized in that** the width (B) of the transverse groove (48) is greater than the thickness D of the first part (42).

7. Wiper device according to one of Claims 1 to 6, **characterized in that** the first part (54) is designed as a punched part or a punched and bent part and has a hole (54) which is in the shape of the first portion (42) of the closure element (40).

8. Wiper device according to one of the preceding claims, **characterized in that** the closure element (40) reaches through the first part (42), and the first part (54) has an inclination (56) such that the closure element (40) is drawn into the first part (54) during the closing operation.

9. Wiper device according to one of the preceding claims, **characterized in that** the closure element (40) has an engagement means (50) which is capable of interacting with a tool.

## Revendications

1. Système d'essuie-glace, en particulier pour un véhicule automobile, comprenant un support (12) pour la fixation à une première partie (54), notamment la carrosserie du véhicule automobile, et un élément de fermeture (40), qui permet de fixer le support (12) à la première partie (54) au moyen d'une connexion rotative, **caractérisé en ce que** l'élément de fermeture (40) présente un point destiné à la rupture (41) et l'élément de fermeture (40) présente une première portion (42) dont la section transversale est plus longue que large, et le point destiné à la rupture (41) est disposé dans la première portion (42), la première portion (42) présentant une rainure transversale (48) pour recevoir la première partie (54).

2. Système d'essuie-glace selon la revendication 1, **caractérisé en ce que** la connexion rotative présente un cliquet (58) pour bloquer l'élément de fermeture (40), de sorte qu'il se forme une connexion par encliquetage rotative.

3. Système d'essuie-glace selon la revendication 1 ou 2, **caractérisé en ce que** le support (12) présente une ouverture (22) et l'élément de fermeture (40) vient en prise dans l'état fermé à travers l'ouverture (22).

4. Système d'essuie-glace selon la revendication 3, **caractérisé en ce que** l'on dispose entre l'élément de fermeture (40) et l'ouverture (22) au moins un manchon d'amortissement (36, 38) au moins partiellement élastique.

5. Système d'essuie-glace selon la revendication 1, **caractérisé en ce que** la première portion (42) est réalisée avec une section transversale en forme d'ellipse.

6. Système d'essuie-glace selon la revendication 1, **caractérisé en ce que** la largeur (B) de la rainure transversale (48) est supérieure à l'épaisseur (D) de la première partie (54).

7. Système d'essuie-glace selon l'une quelconque des revendications 1 à 6, **caractérisé en ce que** la première partie (54) est réalisée sous forme de pièce estampée ou pliée par estampage, et présente un trou (54) qui a la forme de la première portion (42) de l'élément de fermeture (40).

8. Système d'essuie-glace selon l'une quelconque des revendications précédentes, **caractérisé en ce que** l'élément de fermeture (40) vient en prise à travers la première partie (54) et la première partie (54) présente un biseau (56) de telle sorte que l'élément de fermeture (40) soit tiré dans la première partie (54) lors de l'opération de fermeture.

9. Système d'essuie-glace selon l'une quelconque des revendications précédentes, **caractérisé en ce que** l'élément de fermeture (40) présente une prise (50) permettant de coopérer avec un outil.
